# FASCICULE DE BREVET EUROPEEN

(11) **EP 3 194 877 B1**
(45) Date de publication et mention de la délivrance du brevet: **29.08.2018**
(21) Numéro de dépôt: 15763609.3
(22) Date de dépôt: 16.09.2015
(51) Int. Cl.: F28F 3/04, F28D 1/03, F28D 20/02, F28D 21/00, F28D 20/00, B60H 1/00, B60H 1/32

(54) **ÉVAPORATEUR STOCKEUR AVEC DESIGN PLAQUES GAUFRETTES FACILITANT LA CONGÉLATION DU PCM**
SPEICHERVERDAMPFER MIT RIFFELBLECHDESIGN ZUR ERMÖGLICHUNG DES GEFRIERENS DES PCM
STORAGE EVAPORATOR WITH CORRUGATED PLATE DESIGN FACILITATING THE FREEZING OF THE PCM

(30) Priorité: 17.09.2014 FR 1458772
(43) Date de publication de la demande: 26.07.2017
(73) Titulaire: Valeo Systèmes Thermiques, 78320 Le Mesnil Saint Denis (FR)
(72) Inventeur: ROBILLON, Lionel, F-72230 Mulsanne (FR); BELLENFANT, Aurélie, F-72210 Roeze-sur-Sarthe (FR); TISSOT, Julien, F-92800 Puteaux (FR); MOREAU, Sylvain, F-72700 Spay (FR)
(74) Mandataire: Neuviale, Bertrand
(86) Numéro de dépôt international: PCT/EP2015/071265
(87) Numéro de publication internationale: WO 2016/042048

(56) Documents cités:
- WO-A1-2013/125533
- DE-A1-102007 048 416
- US-A1- 2010 307 180

## Description

L'invention concerne un évaporateur pour dispositif de climatisation de véhicule automobile.

L'évaporateur, relié au reste du circuit de climatisation d'un véhicule automobile, a pour fonction de refroidir un fluide de ventilation destiné à être soufflé à l'intérieur d'un habitacle du véhicule. Généralement le fluide de ventilation est de l'air provenant de l'extérieur du véhicule.

L'évaporateur comprend ainsi une pluralité de tubes réfrigérants à l'intérieur desquels un fluide réfrigérant circule. Au contact de ces tubes réfrigérants, le fluide de ventilation cède une partie de ses calories aux tubes réfrigérants et est par conséquent refroidi. La circulation du fluide à l'intérieur du circuit de climatisation est assurée par un compresseur entraîné le plus souvent par un moteur du véhicule automobile

Par conséquent, lorsque le moteur du véhicule est arrêté, la circulation du fluide réfrigérant dans le dispositif n'a plus lieu et l'échange de chaleur entre l'air et le fluide réfrigérant ne peut plus s'opérer. L'air soufflé dans l'habitacle du véhicule n'est alors plus rafraîchi. Cette situation est d'autant plus problématique que des systèmes d'économie de carburant prévoient l'arrêt automatique du moteur lorsque la voiture s'immobilise, empêchant ainsi le dispositif de climatisation de fonctionner.

Il est connu de munir l'évaporateur d'un réservoir de matériau de stockage thermique. Pendant le fonctionnement du moteur, le fluide réfrigérant circulant à l'intérieur de l'évaporateur refroidit simultanément l'air traversant l'évaporateur et le réservoir de matériau de stockage thermique. Lorsque le moteur est à l'arrêt, le matériau de stockage thermique restitue les frigories précédemment accumulées pour refroidir l'air traversant l'évaporateur. On rappelle que, par analogie avec la calorie, la frigorie correspond à la quantité de chaleur nécessaire pour abaisser de 1°C la température de 1 gramme d'eau de 14,5 à 15,5°C sous la pression atmosphérique normale.

Il est également connu d'utiliser, comme matériau de stockage thermique, un matériau à changement de phase désigné par l'acronyme anglais PCM, pour « phase change material ». Lorsque le PCM est en contact avec le fluide réfrigérant, il se solidifie. Lorsque le moteur est à l'arrêt, le PCM se liquéfie et cède donc des frigories à l'air traversant l'évaporateur.

Il est connu de disposer le PCM dans des tubes à géométrie en damier associés à des tubes réfrigérants également disposés en damier. Mais, du fait de cet agencement, la répartition des pressions au sein des tubes est hétérogène. Il est donc nécessaire de JP-2012 037 900, des exemples d'évaporateurs munis d'organes de stockage comportant des pluralités de logement formant réservoirs de matériau à changement de phase.

Les évaporateurs divulgués présentent l'inconvénient de ne pas solidifier de manière homogène et complète en un temps suffisamment court les PCM lorsque le moteur du véhicule est en fonctionnement. Ainsi, le PCM peut n'être pas entièrement solidifié lorsque le véhicule s'arrête, par exemple à un feu rouge, et ne pas assurer le refroidissement de l'air soufflé dans l'habitacle pour une durée suffisante. De plus, les échanges thermiques entre le fluide réfrigérant et les logements formant réservoirs de PCM sont peu efficients, de sorte qu'il faut munir les réservoirs de PCM d'ailettes chargées d'améliorer l'efficacité du transfert thermique. Ces ailettes alourdissent l'évaporateur. En outre, du fait de l'agencement des réservoirs de PCM dans l'évaporateur, le fluide de ventilation subit des frottements mécaniques lors de la traversée de l'évaporateur. Ces frottements mécaniques se traduisent par des pertes de charge.

Le document WO 2013/125533 décrit un évaporateur pour dispositif de véhicule automobile selon le préambule de la revendication 1. Un but de l'invention est donc de remédier à ces inconvénients.

Pour ce faire, on prévoit selon l'invention un évaporateur pour dispositif de climatisation de véhicule automobile selon la revendication 1. Selon le modèle thermodynamique couramment admis de la solidification, un germe solide de forme sphérique croît dans le liquide. C'est pourquoi, avec un logement de forme hémisphérique, la solidification du matériau de stockage thermique s'effectue de manière homogène et rapide. Il n'est ainsi plus nécessaire d'insérer des ailettes dans les réservoirs de PCM.

De préférence, le fluide de ventilation est de l'air.

Il s'agit du fluide de ventilation le plus couramment utilisé.

Selon un mode de réalisation, le matériau de stockage thermique comprend un matériau à changement de phase.

Avec un tel matériau, le changement de phase solide/liquide s'effectue sur une plage de température restreinte. On a alors besoin de fournir peu d'énergie pour effectuer la solidification. Selon l'invention, au moins une paroi du tube réfrigérant forme une paroi du logement.

Une seule paroi sépare alors le PCM et le fluide réfrigérant, les transferts thermiques se font de manière plus efficace. Les évaporateurs décrits dans les demandes US-2010 307 180, JP-2011 201 328 et JP-2012 037 900 présentent des tubes réfrigérants disposés partiellement en contact avec des réservoirs de PCM. Notamment, l'évaporateur décrit dans la demande US-2010 307 180 comporte des réservoirs de matériau de stockage thermique dont la section est de dimension variable. Ainsi, le réservoir n'est pas systématiquement en contact avec le tube réfrigérant et le transfert thermique n'est donc pas optimal. De plus, dans les évaporateurs des documents antérieurs, deux parois séparent le fluide réfrigérant du PCM, ce qui diminue l'efficacité du transfert thermique.

De préférence, l'organe présente au moins deux logements, les logements étant reliés entre eux en communication fluidique.

Les risques de surpression au sein d'un seul logement sont ainsi limités.

Selon un mode de réalisation, les logements sont reliés entre eux au moyen d'un canal de liaison.

Avantageusement, le rapport entre le rayon d'un logement et une dimension du canal de liaison reliant ce logement à l'autre logement est compris entre 0,5 et 1.

Lorsque ce rapport est proche de 0,5, on constate que la solidification s'effectue rapidement.

Selon un mode de réalisation, chaque logement a une forme sensiblement hémisphérique.

De préférence, le rayon d'un logement est différent de celui de l'autre logement.

Avantageusement, l'organe de stockage comprend une pluralité de logements répartis aux noeuds d'un réseau régulier. Les logements forment alors une distribution régulière dans l'espace. Cette distribution régulière peut être caractérisée par sa maille élémentaire. La maille élémentaire est la distribution de logements la plus simple qui se répète dans l'ensemble de l'organe de stockage. Dans l'espace bidimensionnel, on connait notamment les réseaux de type orthorhombique, éventuellement centré, tétragonal ou hexagonal.

Ainsi, on limite la perte de charge de l'air traversant l'évaporateur à 30% par rapport à un évaporateur sans réservoir de matériau de stockage thermique.

On prévoit également, selon l'invention, un dispositif de climatisation pour véhicule automobile caractérisé en ce qu'il comprend un évaporateur tel que décrit ci-dessus.

On va maintenant décrire, à titre d'exemple non limitatif, un mode de réalisation de l'invention à l'aide des figures suivantes :
- la figure 1 est une vue en perspective d'un organe de stockage l'invention ;
- la figure 2 est une vue en perspective et en coupe d'un logement comprenant le matériau de stockage thermique ; et
- la figure 3 est une vue en coupe d'une partie d'un évaporateur portant un organe de stockage selon une variante du mode de réalisation de l'invention
- la figure 4 est en vue en perspective d'un évaporateur comportant plusieurs organes de stockage, selon l'invention.

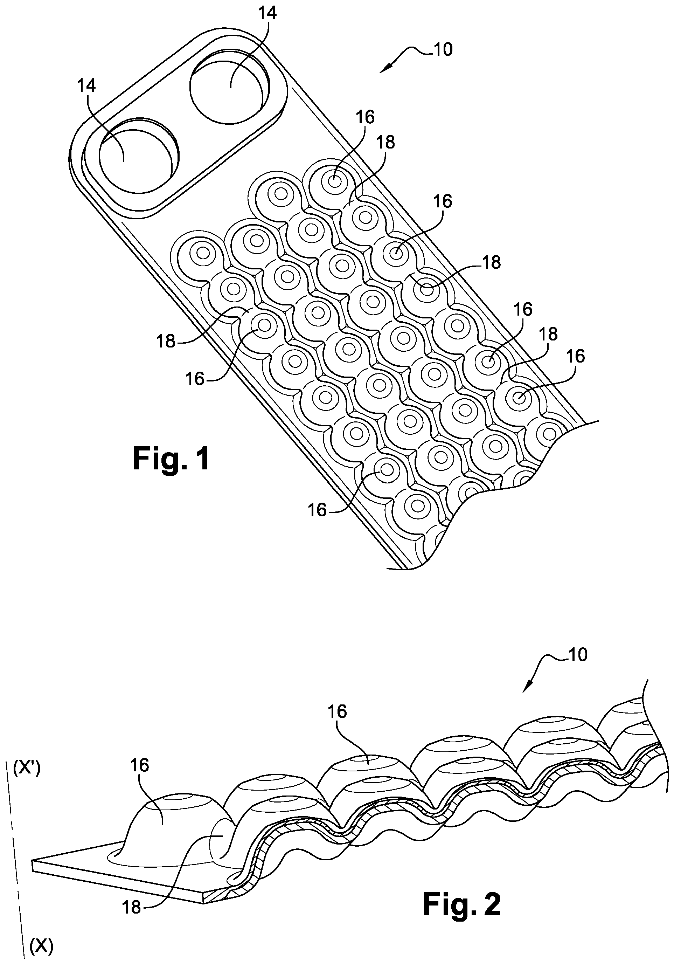

On a représenté, aux figures 1 à 3, un organe de stockage 10 d'un évaporateur 12 pour dispositif de climatisation de véhicule automobile selon un premier mode de réalisation de l'invention. L'organe de stockage 10 se présente sous la forme d'une plaque et comprend deux orifices 14 permettant de relier l'organe 10 aux autres éléments formant l'évaporateur 12 à l'aide de moyens d'assemblage classiques (non représentés).

Comme on le voit notamment aux figures 1 et 2, l'organe de stockage 10 comporte une pluralité de logements 16 ayant une forme sensiblement hémisphérique et reliés entre eux en communication fluidique au moyen de canaux de liaison 18. Un canal de liaison 18 relie en communication fluidique deux logements 16 adjacents. Suivant l'axe (XX') s'étendant transversalement à l'organe de stockage 10, la hauteur du canal de liaison 18 est inférieure au rayon des logements 16. Dans ce mode de réalisation, les logements hémisphériques 16 ont le même rayon, ici de 3,5 millimètres. Selon une variante du présent mode de réalisation, au moins deux logements hémisphériques ont des rayons qui diffèrent. Ici, le rapport entre le rayon d'un logement 16 et la dimension suivant l'axe (XX') du canal de liaison 18 est de 0,5 mais selon des variantes, ce rayon est compris entre 0,5 et 1. De plus, la pluralité de logements 16 est répartie aux noeuds d'un réseau régulier dit hexagonal primitif par analogie avec les réseaux de Bravais. Selon des variantes, les logements 16 sont répartis en un autre type de réseau régulier unidimensionnel, bidimensionnel voire tridimensionnel.

La dimension et la répartition des logements 16 ont été pensées en tenant compte des contraintes de mise en forme de l'aluminium qui est le matériau à partir duquel est produit l'organe de stockage 10. L'aluminium est un matériau léger et par conséquent, du fait de l'absence d'ailettes dans les logements 16, le poids de l'évaporateur 12 est relativement faible.

De plus, la forme des logements 16 ainsi que leur répartition dans l'organe de stockage 10 sont destinées à limiter la perte de charge que subit un fluide de ventilation traversant l'évaporateur 12. Ici, la perte de charge n'excède pas 30% par rapport à un évaporateur analogue sans organe de stockage 10, voire à un évaporateur comportant des organes de stockage répartis approximativement tous les quatre tubes.

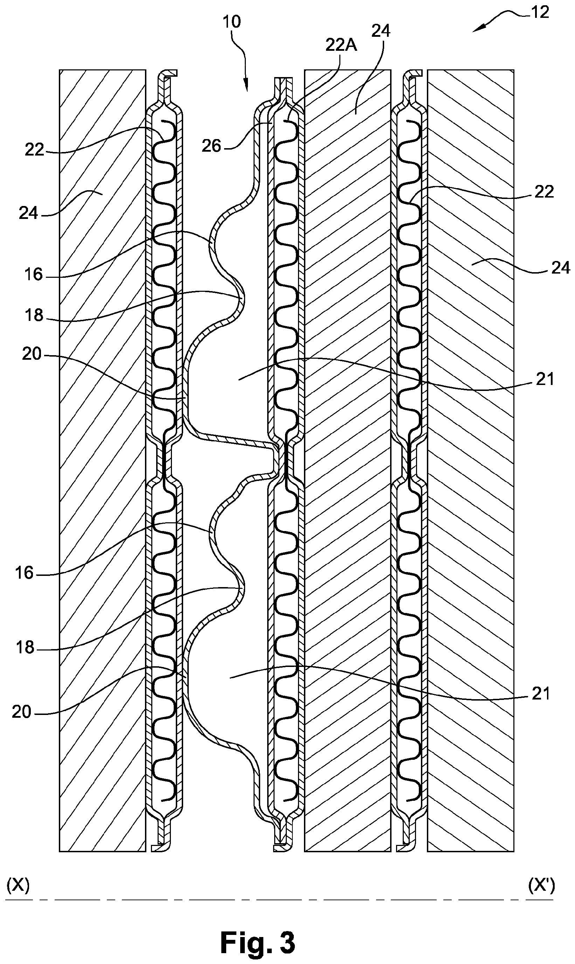

Dans cet exemple de réalisation de l'invention, chaque logement 16 de l'organe de stockage 10 a une forme sensiblement hémisphérique. Selon une variante illustrée à la figure 3, des logements 16 de forme sensiblement hémisphérique sont reliés à d'autres logements 20 qui présentent des formes sensiblement semi-ellipsoïdales.

Les logements 16 ou 20 sont destinés à stocker des frigories. Pour ce faire, les logements 16, 20 et les canaux de liaisons 18 sont remplis avec un matériau dit de stockage thermique qui est ici un matériau à changement de phase (ou PCM) 21 de type connu en soi.

L'évaporateur 12 comprend également une pluralité de tubes réfrigérants 22 dans lesquels circule un fluide réfrigérant. Ce fluide peut être notamment de type HFO-1234yf ou tout autre fluide réfrigérant apte à être utilisé dans les dispositifs de climatisation de véhicule automobile.

L'évaporateur 12 comporte en outre une pluralité de rangées d'ailettes 24. Chaque rangée d'ailette 24, parfois nommée d'intercalaire ondulée, est positionnée, suivant l'axe (XX'), à côté d'au moins un tube réfrigérant 22. Ces ailettes s'étendent entre deux tubes 22, 22A de fluide réfrigérant comme l'organe de stockage 10.

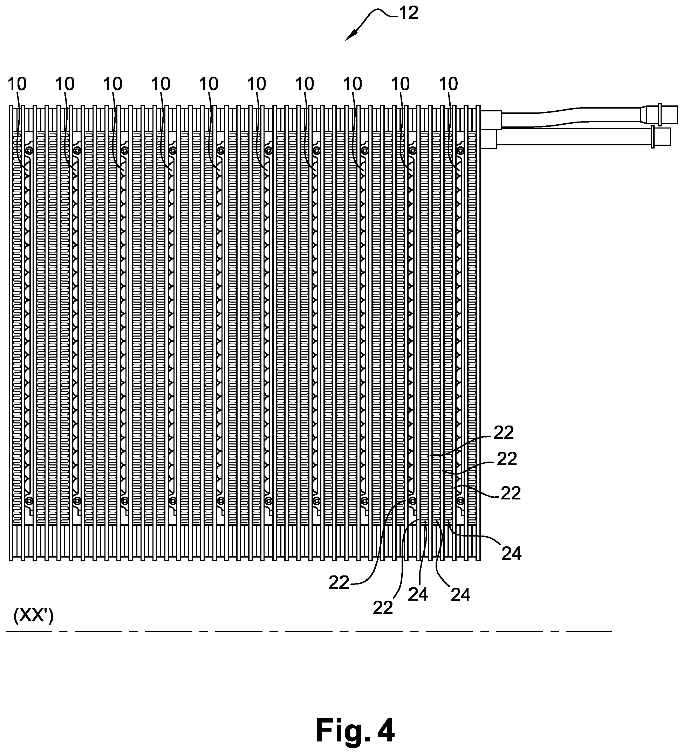

On a représenté à la figure 4 un évaporateur 12 comprenant une pluralité d'organes de stockage 10. Les organes de stockage 10 sont régulièrement disposés suivant l'axe (XX') entre deux tubes réfrigérants 22.

Durant le fonctionnement du dispositif de climatisation, le fluide de ventilation, ici de l'air provenant de l'extérieur du véhicule, traverse les rangées d'ailettes 24. Si le moteur du véhicule est en fonctionnement, le fluide réfrigérant circule dans l'ensemble du dispositif de climatisation. Le fluide réfrigérant arrive donc froid dans l'évaporateur 12 et cède alors des frigories à l'air qui traverse les rangées d'ailettes 24. L'air refroidi circule ensuite vers l'habitacle du véhicule qu'il peut ainsi climatiser. Simultanément, le fluide réfrigérant cède une partie de ses frigories au PCM qui se solidifie. Du fait de la forme des logements 16, 20, la solidification se fait de manière rapide et homogène. De plus, comme la solidification est un processus exogène, le PCM constitue donc un « réservoir de frigories ».

Le transfert thermique, notamment entre le tube réfrigérant 22A et les logements 16, 20 est d'autant plus efficace que, comme on le voit sur la figure 3, une paroi 26 délimitant le tube réfrigérant 22A est également une paroi délimitant les logements 16, 20. Ainsi, seule une cloison sépare le tube 22A et les logements 16, 20. De plus, comme la paroi 26 est commune au logement 16, 20 et au tube réfrigérant 22A, sur toute la surface de la paroi 26, le PCM est en contact avec le tube réfrigérant 22A ce qui permet également d'améliorer sensiblement l'efficacité du transfert thermique entre le PCM et le liquide réfrigérant à l'intérieur du tube 22A.

Lorsque le moteur du véhicule n'est pas en fonctionnement, du fait d'un arrêt de courte durée du véhicule, et qu'un utilisateur du véhicule actionne le dispositif de climatisation, le PCM des logements 16, 20 se liquéfie. Comme la liquéfaction est endothermique, le PCM cède les frigories accumulées durant la solidification au liquide réfrigérant des tubes réfrigérants 22, 22A. Le liquide réfrigérant refroidit et cède à son tour des frigories à l'air circulant à travers les rangées d'ailettes 24. L'air refroidit est ensuite soufflé dans l'habitacle du véhicule qu'il climatise.

Bien entendu, on pourra apporter de nombreuses modifications à l'invention sans sortir du cadre de celle-ci.

On pourra notamment modifier la forme ou la disposition des ailettes, varier la disposition des organes de stockage 10 et des tubes réfrigérants 22 les uns par rapport aux autres au sein de l'évaporateur 12.

On pourra également utiliser divers motifs réguliers lors de la disposition des logements 16, 20 de l'organe de stockage 10.

## Revendications

1. Evaporateur (12) pour dispositif de climatisation de véhicule automobile comprenant au moins un tube réfrigérant (22, 22A) destiné à permettre la circulation d'un fluide réfrigérant et au moins un organe de stockage (10) comportant au moins un logement (16, 20) comprenant un matériau dit de stockage thermique (21) destiné à stocker des frigories et à les restituer à un fluide de ventilation destiné à circuler vers un habitacle du véhicule, **caractérisé en ce que** le logement (16) a une forme sensiblement hémisphérique, au moins une paroi (26) du tube réfrigérant (22A) formant une paroi (26) du logement (16, 20)..

2. Evaporateur (12) selon la revendication précédente, dans lequel le fluide de ventilation est de l'air.

3. Evaporateur (12) selon au moins l'une quelconque des revendications précédentes, dans lequel le matériau de stockage thermique (21) comprend un matériau à changement de phase (21).

4. Evaporateur (12) selon au moins l'une quelconque des revendications précédentes, dans lequel l'organe (10) présente au moins deux logements (16, 20), les logements (16, 20) étant reliés entre eux en communication fluidique.

5. Evaporateur (12) selon la revendication précédente, dans lequel les logements (16, 20) sont reliés entre eux au moyen d'un canal de liaison (18).

6. Evaporateur (12) selon la revendication précédente, dans lequel le rapport entre le rayon d'un logement (16, 20) et une dimension du canal de liaison (18) reliant ce logement (16, 20) à l'autre logement (16, 20) est compris entre 0,5 et 1.

7. Evaporateur (12) selon au moins l'une quelconque des revendications 4 à 6, dans lequel chaque logement (16, 20) a une forme sensiblement hémisphérique.

8. Evaporateur (12) selon au moins l'une quelconque des revendications précédentes, dans lequel le rayon d'un logement (16, 20) est différent de celui d'un autre logement (16, 20).

9. Evaporateur (12) selon l'une quelconque des revendications précédentes, dans lequel l'organe de stockage (10) comprend une pluralité de logements (16, 20) répartis aux noeuds d'un réseau régulier.

10. Dispositif de climatisation pour véhicule automobile **caractérisé en ce qu'il** comprend un évaporateur (12) selon au moins l'une quelconque des revendications précédentes.

## Patentansprüche

1. Verdampfer (12) für eine Klimatisierungsvorrichtung eines Kraftfahrzeugs, der mindestens ein Kühlrohr (22, 22A), das dazu bestimmt ist, die Strömung eines Kühlfluids zu erlauben, und mindestens ein Speicherorgan (10) enthält, das mindestens eine Aufnahme (16, 20) aufweist, die ein so genanntes thermisches Speichermaterial (21) enthält, das dazu bestimmt ist, Frigorien zu speichern und sie an ein Lüftungsfluid abzugeben, das dazu bestimmt ist, zu einem Innenraum des Fahrzeugs zu strömen, **dadurch gekennzeichnet, dass** die Aufnahme (16) im Wesentlichen eine Halbkugelform hat, wobei mindestens eine Wand (26) des Kühlrohrs (22A) eine Wand (26) der Aufnahme (16, 20) bildet.

2. Verdampfer (12) nach dem vorhergehenden Anspruch, wobei das Lüftungsfluid Luft ist.

3. Verdampfer (12) nach mindestens einem der vorhergehenden Ansprüche, wobei das thermische Speichermaterial (21) ein Phasenwechselmaterial (21) enthält.

4. Verdampfer (12) nach mindestens einem der vorhergehenden Ansprüche, wobei das Organ (10) mindestens zwei Aufnahmen (16, 20) aufweist, wobei die Aufnahmen (16, 20) miteinander in Fluidverbindung stehen.

5. Verdampfer (12) nach dem vorhergehenden Anspruch, wobei die Aufnahmen (16, 20) mittels eines Verbindungskanals (18) verbunden sind.

6. Verdampfer (12) nach dem vorhergehenden Anspruch, wobei das Verhältnis zwischen dem Radius einer Aufnahme (16, 20) und einer Abmessung des Verbindungskanals (18), der diese Aufnahme (16, 20) mit der anderen Aufnahme (16, 20) verbindet, zwischen 0,5 und 1 liegt.

7. Verdampfer (12) nach mindestens einem der Ansprüche 4 bis 6, wobei jede Aufnahme (16, 20) im Wesentlichen eine Halbkugelform hat.

8. Verdampfer (12) nach mindestens einem der vorhergehenden Ansprüche, wobei der Radius einer Aufnahme (16, 20) sich von demjenigen einer anderen Aufnahme (16, 20) unterscheidet.

9. Verdampfer (12) nach einem der vorhergehenden Ansprüche, wobei das Speicherorgan (10) eine Vielzahl von Aufnahmen (16, 20) enthält, die an den Knoten eines gleichmäßigen Netzes verteilt sind.

10. Klimatisierungsvorrichtung für ein Kraftfahrzeug, **dadurch gekennzeichnet, dass** sie einen Verdampfer (12) nach mindestens einem der vorhergehenden Ansprüche enthält.

## Claims

1. Evaporator (12) for a motor vehicle air conditioning device comprising at least one refrigerant tube (22, 22A) intended to allow the circulation of a refrigerant fluid and at least one storage member (10) comprising at least one housing (16, 20) comprising a material referred to as a thermal storage material (21) intended to store frigories and release them to a ventilation fluid intended to circulate towards an interior of the vehicle, **characterized in that** the housing (16) has a substantially hemispherical shape, at least one wall (26) of the refrigerant tube (22A) forming a wall (26) of the housing (16, 20).

2. Evaporator (12) according to the preceding claim, in which the ventilation fluid is air.

3. Evaporator (12) according to at least either one of the preceding claims, in which the thermal storage material (21) comprises a phase change material (21).

4. Evaporator (12) according to at least any one of the preceding claims, in which the member (10) has at least two housings (16, 20), the housings (16, 20) being connected to one another in fluidic communication.

5. Evaporator (12) according to the preceding claim, in which the housings (16, 20) are connected to one another by means of a connecting duct (18).

6. Evaporator (12) according to the preceding claim, in which the ratio between the radius of a housing (16, 20) and a dimension of the connecting duct (18) connecting this housing (16, 20) to the other housing (16, 20) is comprised between 0.5 and 1.

7. Evaporator (12) according to at least any one of Claims 4 to 6, in which each housing (16, 20) has a substantially hemispherical shape.

8. Evaporator (12) according to at least any one of the preceding claims, in which the radius of one housing (16, 20) is different from that of another housing (16, 20).

9. Evaporator (12) according to any one of the preceding claims, in which the storage member (10) comprises a plurality of housings (16, 20) distributed at the nodes of a regular lattice.

10. Air-conditioning device for a motor vehicle, **characterized in that** it comprises an evaporator (12) according to at least any one of the preceding claims.
